# EUROPÄISCHE PATENTANMELDUNG

(11) **EP 0 887 011 A1**
(43) Veröffentlichungstag der Anmeldung: **30.12.1998**
(21) Anmeldenummer: 98105448.9
(22) Anmeldetag: 25.03.1998
(51) Int. Cl.: A01F 15/00, A01F 15/07

(54) **Verdichtungsverfahren für verdichtbare Güter, insbesondere landwirtschaftliches Halm- und Blattgut oder ähnlichem**

(30) Priorität: 26.03.1997 AT 177/97
(71) Anmelder: Alois Pöttinger Maschinenfabrik GmbH, 4710 Grieskirchen (AT)
(72) Erfinder: Rauscher, Sigurd Ing, 4710 Grieskirchen (AT)
(74) Vertreter: Dupal, Helmut, Dipl.-Ing.

(57) **Zusammenfassung**

Verfahren zur Herstellung von gewickelten Rundpreßballen aus verdichtbaren Gütern, insbesondere landwirtschaftlichem Halm- und Blattgut oder aus Fasern, Gewebe und ähnlichen Abfallprodukten, die in einer Aufsammelstufe aufgenommen, mit einer Förderstufe einer Vorverdichtungstufe zugeführt und in dieser zu einem endlosen Strang vorgeformt werden und über eine Zuführungsstufe einer Verdichtungsstufe übergeben werden, in der das Preßgut durch eine Rotationsbewegung zu einem Preßstrang verdichtet wird, der aus der Verdichtungsstufe als geformter Rundpreßballen an eine Abgabestufe abgegeben und von dieser auf dem Boden oder einem Transportfahrzeug oder auf einer folgenden Nachbearbeitungsstufe abgelegt wird, wobei in der Verdichtungsstufe durch die Zufuhr des Preßgutes zu dem in Drehbewegung versetzten Preßgut ein endloser verdichteter Preßstrang (15) gebildet wird, dessen Verdichtung durch die Menge des zugeführten Preßgutes und durch den Durchtrittswiderstand bei der Bewegung durch die Verdichtungsstufe beeinflußbar ist und wobei der endlose Preßstrang gleichlaufend mit seinem längsaxialen Austritt aus der Verdichtungsstufe und in einer unnmittelbar anschließenden Stützstufe unter Beibehaltung der Rotationsbewegung und der Austrittsbewegung getragen und nach Bewickeln mit Garn, Netz oder Folie o. dgl. in einer Bewicklungsstufe, in einer Abtrennstufe abgelängt wird, sowie Vorrichtungen zur Ausführung des Verfahrens.

## Beschreibung

Die Erfindung bezieht sich auf ein Verdichtungsverfahren und eine Verdichtungsvorrichtung mit rotierender Preßkammer für verdichtbare Güter, insbesondere landwirtschaftliches Halm- und Blattgut oder Fasern, Gewebe und ähnliche Abfallprodukte, mit den Merkmalen des ersten Verfahrensanspruches und des ersten Vorrichtungsanspruches.

Es sind eine Reihe verschiedener Verdichtungsvorrichtungen für diese Güter bekannt geworden.

Die Rundballenpressen besitzen zweiteilige Preßkammern in die das Gut an der Mantelseite zugeführt wird und die entweder eine Mehrzahl wenigstens zum Teil angetriebener Walzen am zylindrischen Preßkammermantel aufweisen oder es sind antreibbare Gurte vorgesehen, deren Abstand im Inneren der Preßkammer sich an die Gutmenge anpaßt. Die Ausstoßung des Rundballens geschieht nach Öffnen der Preßkammer, nach dem Stillsetzen der Presse, d.h. diese Presse arbeitet absätzig.

Weitere absätzig arbeitende Pressen sind die Großpacken- oder Quaderballenpressen mit rechteckiger Preßkammer in die das Preßgut mit einem Preßstempel verdichtet wird und wegen der hohen Preßdrücke teuer und leistungsaufwendig sind.

Es sind auch Kompaktrollenpressen mit schräg zu Flußrichtung des Preßgutes angeordneten Preßwalzen bekannt geworden, die zwar kontinuierlich arbeitend einen endlosen Preßstrang erzeugen können, die aber bisher noch keinen Eingang in die Arbeitspraxis gefunden haben.

Eine ebenfalls absätzig arbeitende Verdichtungsvorrichtung mit hohem Bauaufwand bildet die Presse nach Molitorisz.

Bei keinen dieser Pressen ist es möglich, sowohl endlose Preßstränge, als auch Rundballen beliebiger, unterschiedlicher Länge mit der gleichen Verdichtungseinrichtung herzustellen.

Aus der DE 29 26 348 A1 ist eine Verdichtungsvorrichtung bekannt geworden, bei der Rundballen in der Länge einer rotierenden Preßkammer hergestellt werden, doch ist diese Maschine sehr bauaufwendig und auf eine dosierte Zuführung des Preßgutes angewiesen, weil ein Verdichtungseinsatz mit Walzen im Inneren der Preßkammer arbeitend, außen am Rahmen gelagert ist, was eine antreibbare Lagerung der Preßkammer am Mantel erfordert. Die Bildung des Rundballens erfolgt absätzig durch Verschließen der Austrittsseite der Preßkammer während des Roll- und Preßvorganges.

Für eine effiziente Arbeitsweise ist aber ein Stillstandsfreies Herstellen der Rundballen wesentlich.

Aufgabe der Erfindung ist es, die beschriebenen Nachteile zu vermeiden und ein Verfahren und eine Vorrichtung zur Ausübung des Verfahrens anzugeben, mit denen eine kontinuierliche Herstellung von Rundpreßballen von praktisch beliebiger Länge unter Binden mit Garn oder Bewickeln mit Folie oder Netz hergestellt und auf dem Boden oder auf einer nachgeordneten Wickelmaschine abgelegt werden kann.

Diese Aufgabe wird bei einem Verfahren und einer Verdichtungseinrichtung nach dem Gattungsbegriff mit den Merkmalen des ersten Verfahrenanspruches und des ersten Vorrichtungsanspruches gelöst.

Die Unteransprüche betreffen besonders vorteilhafte Ausgestaltungen der Erfindung und bilden gleichzeitig einen Teil der Beschreibung der Erfindung.

Mit dem angegebenen Verfahren ist es möglich kontinuierlich zu arbeiten, sodaß weder beim Binden oder Bewickeln noch beim Abtrennen eines Rundpreßballens vom an sich endlosen Preßstrang und auch nicht beim Ablegen auf dem Boden oder auf dem Wickeltisch einer Wickelvorrichtung zur Herstellung eines Silageballens eine Unterbrechung stattfinden muß.

Für die Herstellung der geforderten Verdichtung ist dabei die Vergrößerung des Durchtrittwiderstandes für den durch die Rotationsbewegung gebildeten Gutstrang am Ende der Verdichtungsstufe wesentlich.

Für eine hohe Durchsatzleistung ist eine rasche Zufuhr des Preßgutes bei geringem Widerstand erforderlich, die mit einer strömungsgünstigen keilförmig zusammenlaufenden Form der Gutströme erreichbar ist.

Eine saubere Abtrennung der Ballen ist bei hoher Dursatzgeschwindigkeit nur bei entprechender Gestaltung der Abtrennung mit gleichzeitiger Verschiebung möglich.

Die Ablage des fertigen Rundballens soll in einer vorbestimmbaren Lage erfolgen, wegen der Lagestabilität auf dem Boden oder zur Beschickung einer nachgeschalteten Einrichtung und eine Gestaltung des Verfahrens mit dieser Möglichkeit ist besonders vorteilhaft.

Mit der erfinderischen Verdichtungsvorrichtung ist es möglich ein gleichmäßiges, schichtenförmiges Auftragen des Preßgutes über die ganze Stirnfläche der Preßkammer schraubenförmig zu erreichen, wobei die Schichtdicke vor Allem durch die Umdrehungszahl der Preßkammer und die Zufuhrmenge an Preßgut variiert werden kann.

Weiters ist es möglich Rundpreßballen mit oder ohne hohlen Kern herzustellen.

Ein besonderer Vorteil ist es, Ballen beinahe beliebiger Länge ohne Stillstand der Presse vom endlosen Preßstrang abzuschneiden zu können und einen sauberen Schnitt zu erhalten.

Ein weiterer Vorteil besteht in der Möglichkeit nach der Herstellung des Preßstranges, diesen mit Bindegarn, Folien- oder Netzband zu bewickeln.

Für die sichere Ablage auf dem Boden, wie in Hanglage und für die störungsfreie Ablage auf Folgeeinrichtungen, wie einer Wickeleinrichtung, ist das Ablegen des fertigen Rundpreßballens in voreinstellbaren Lagen von Vorteil, besonders auch für die kontinuierliche Herstellung von Rundpreßballen ohne Stillstandzeiten für die Ablage, wobei das Abstützen des Rundpreßballens (15') während des Ablegens für die störungsfreie Ablage wichtig ist.

Mit einer Einrichtung bei der der Durchgang für den endlosen Preßstrang stets offen ist und der Durchtrittswiderstand durch Veränderung des freien Querschnittes der Preßkammer herstellbar ist und eine Unterstützungsvorrichtung für den Preßstrang und den daraus hergestellten Preßballen vorgesehen ist, wodurch das Abtrennen desselben vom Preßstrang mit einer mitverschiebbaren Abtrennvorrichtung sauber erfolgen kann, nachdem vorher die Bewickelung mit Folien- oder Netzband oder Bindegarn mit einer eigenen Vorrichtung erfolgt ist, wird die Herstellung von Rundpreßballen nahezu beliebiger Länge und Verdichtung und Schichtstärke möglich und es kann die Einrichtung auf die Verarbeitung von Preßgut mit sehr verschiedenen Eigenschaften eingestellt werden.

Besonders günstig ist für die meisten Anwendungen eine zylindrische Preßkammer.

Eine andere vorteilhafte Ausgestaltung der Preßkammer besteht im Aufbau aus achsparallelen angetreibenen Walzen, die die Einführung von Bindegarn, Folien- oder Netzband oder dergleichen oder von Zuschlagstoffen u.ä. zwischen jeweils zwei benachbarten Walzen ermöglicht.

Für die Veränderung des Durchtrittswiderstandes ist die Anordnung mehrer Mantelelemente am Umfang der Preßkammer, die verschwenkbar und verstelbar sind, wodurch auch eine Steuerung oder Regelung möglich ist von Vorteil.

Die Stirnplatte kann zur Herabsetzung der Reibung mit meheren Radialwalzen versehen sein oder aus diesen aufgebaut sein.

Zur Verbesserung der Mitnahme des Preßgutes in der Preßkammer ist die Anbringung von Einbauten oder Ausformungen günstig.

Die Nachbearbeitung des austretenden Preßstranges und des Preßballens wird mit einer Stützvorrichtung, besonders mit Beförderung der Rotation des Gutes, sehr erleichtert.

Die verschiebbare Lagerung der Abtrenneinrichtung und die Ausgestaltung derselben verbessert den Schneidevorgang bedeutend.

Zur Einstellung einer gewünschten Schicktdicke des Preßgutes am Rundballen ist die Veränderung der Drehzahl die einfachste Steuerungsmöglichkeit.

Zur Oberführung des abgetrennten Rundballens ist eine antreibbare Schiebeeinrichtung wegen der Vermeidung von Stauungen vorteilhaft.

Die Verwendung einer Ablegeeinrichtung mit der die Ablage des Ballens in verschiedenen, einstellbaren Lagen möglich ist, verbessert die Arbeitsleistung der Einrichtung durch Vermeidung von Stillstandzeiten. Dabei ist die achparallel zur Preßtrommel verschiebbare Anordnung für das Freimachen von Lagerraum auf der Stützvorrichtung zum stillstandfreien wichtig und das Verfahren als Wagen ausgebildet vereinfacht das Ablegen des Rundpreßballens an der jeweiligen Ablegestelle.

Eine Anpassung von Förderkanal und Zuführungsöffnung in der Stirnplatte für eine anpassende Zufuhr des Preßgutes zum Preßstrang in der Preßkammer ist für eine hohe Durchsatzleistung und einen störungsfreien Betrieb von besonderem Vorteil.

Die Erfindung wird an Hand der Zeichnung einer Ausführungsform einer Verdichtungseinrichtung beschrieben.
Es zeigt:

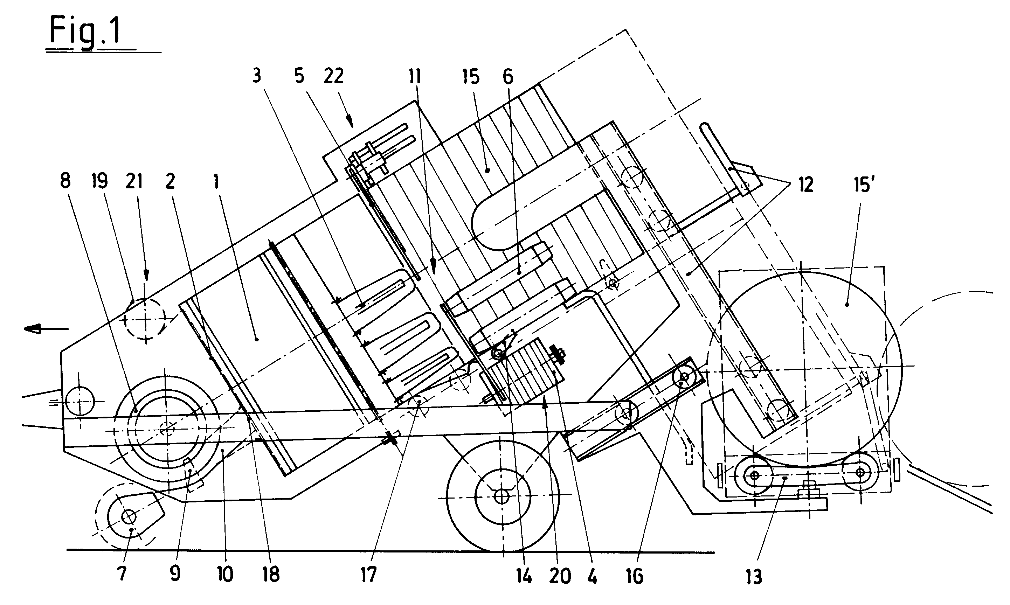

- Fig. 1: eine Seitenansicht einer Verdichtungsvorrichtung mit nachgeordneter Wickelvorrichtung.

Die Verdichtungsvorrichtung ist mit einer Preßkammer 1 mit zylindrischem Querschnitt ausgerüstet, die um die Zylinderlängsachse rotiert und an der Eintrittseite des Preßgutes mit einer feststehenden Stirnplatte 2 gleichen Querschnittes abgeschlossen und an der Austrittsseite 11 offen ist. In Fig. 1 ist eine Aufsammeleinrichtung 7 dargestellt, die auf dem Boden liegendes Halm- und Blattgut aufnehmen und an eine Förder- und Vorverdichtungsvorrichtung 8 übergeben, die einen vorverdichteten, vorgeformten Gutstrang in einen Förderkanal 10 fördert und durch eine Einlaßöffnung 18 in der Stirnplatte 2 in den Innenraum der Preßkammer 1 schiebt.

Förderkanal 10 und Einlaßöffnung 18 sind unter einem spitzen Winkel zu dem in der Preßkammer 1 umlaufenden endlosen Preßstrang 15 angeordnet, wodurch das Preßgut in einem, in Bewegungsrichtung der beiden Gutmengen, sich verjüngenden Keil umgelenkt und zusammengeführt wird, sodaß die Übernahme des in die Preßkammer 1 eintretenden vorgepreßten Gutstranges erleichtert wird, was durch unmittelbar vor der Einlaßöffnung angeordnete Förderwalzen weiter verbessert werden kann. Das an der Einlaßöffnung 18 durch die Rotationsbewegung vorbeistreichende, in der Preßkammer 1 befindliche Preßgut wird eine kraftsparende kontinuierliche Übernahme des eintretenden Preßgutes über den gesamten Durchmesser der Stirnplatte 2 erreicht.

Der Fördereinrichtung 8 gegenüber sind die Messer eines Schneidwerkes 9 zum Schneiden des Preßgutes eingeschwenkt.

Von der Austrittsseite 11 der Preßkammer 1 zur Eintrittsseite bis über ein Drittel der Länge reichend sind über der Mantelfläche regelmäßig verteilt, nebeneinander zur Eintrittsseite liegend, um Querachsen schwenkbare Mantelelemente 3 angebracht, die mit in Längsachse der Preßkammer 1 verschiebbaren Rollen einer Verschiebeeinrichtung 17 in ihrer, den Durchtrittsquerschnitt der Preßkammer 1 verengenden Lage einstellbar sind.

Durch das, durch die Einlaßöffnung 18, ständig neu zugeführte Preßgut wird ein Vorschub des sich ständig verlängernden endlosen Preßstranges 15 erreicht, der an der Austrittsseite 11 durch Wirkung der Mantelelemente 3 mehr oder weniger stark verdichtet austritt. Von der dort angeordneten Bewicklungsvorrichtung 20 wird ein Folien- oder Netzband 4 über den sich drehend austretenden Preßstrang 15 gewickelt.

Sobald der ausgetretene Preßstrang 15 die ausreichende Länge besitzt, wird mit einer unmittelbar an der Austrittsseite 11 angeordneten, auf einer Verschiebeeinrichtung 22 aus Führungen, gleichlaufend mit der Vorschubbewegung des Preßstranges 15 verschiebbaren Abtrenneinrichtung 5 ein Rundpreßballen 15' gewünschter Länge abgeschnitten. Die Abtrenneinrichtung 5 besitzt zwei aneinander anliegende, gegensinnig bewegbare Messer, die eingeschwenkt bis knapp über die Mittelachse des Preßstranges 15 reichen.

Der Preßstrang 15 und der abgetrennte Rundpreßballen 15' lagern auf einer an die Austrittsseite 11 der Preßkammer 1 anschließenden Stützvorrichtung 6, die unten und seitlich von in Längsachsrichtung des Preßstranges 15 angeordneten Walzen unterstützt werden, die auch angetrieben die Drehbewegung des Preßstranges 15 und des abgeschnittenen Rundpreßballens 15' befördern.

Der Rundpreßballen 15' wird vom Vorschub des Preßstranges 15 weiter in Richtung auf eine Ablegeeinrichtung 12 verschoben, was mit einer Schiebeeinrichtung 14 unterstützt wird, deren nach oben federnd verschwenkbarer Schiebekamm an dem Rundpreßballen 15' von unten her angreift und diesen weiterschiebt.

In der Ablegeeinrichtung 12 ist der Ballen 15' stirnseitig und seitlich gehalten und dieser kann damit in Längsrichtung der Preßkammer 1 von dieser weg verschoben und dann nach unten geschwenkt oder gekippt, auf den Tisch einer Wickeleinrichtung 13 abgelegt werden, wie in Fig.1 beispielsweise dargestellt ist.

### Legende

- 1: Preßkammer
- 2: Stirnplatte
- 3: schwenkbares Mantelelement der Preßkammer 1
- 4: Folien- oder Netzband der Bewickeleinrichtung
- 5: Abtrenneinrichtung
- 6: Stützvorrichtung für den Preßstrang 15 und den abgetrennten Rundpreßballen 15'
- 7: Aufsammeleinrichtung
- 8: Förder- und Vorverdichtungseinrichtung
- 9: Schneidwerk der Förder- und Vorverdichtungseinrichtung
- 10: Förderkanal
- 11: Austrittsseite der Preßkammer 1
- 12: Ablegeeinrichtung der Wickeleinrichtung 13
- 13: Wickeleinrichtung für den abgetrennten Rundpreßballen 15'
- 14: Schiebeeinrichtung für den abgetrennten Rundpreßballen 15'
- 15: endloser Preßstrang
- 15': Rundpreßballen
- 16: Verschiebeeinrichtung der Bewickelungseinrichtung 20
- 17: Verstelleinrichtung der Mantelelemente 3
- 18: Einlaßöffnung in der Stirnplatte 2, für den Förderkanal 10
- 19: Bindegarn der Bindeeinrichtung
- 20: Bewicklungseinrichtung für den Preßstrang 15
- 21: Bindegarneinrichtung
- 22: Verschiebeeinrichtung für die Abtrenneinrichtung 5

## Patentansprüche

1. Verfahren zur Herstellung von gewickelten Rundpreßballen aus verdichtbaren Gütern, insbesondere landwirtschaftlichem Halm- und Blattgut oder aus Fasern, Gewebe und ähnlichen Abfallprodukten, die insbesondere in einer Aufsammelstufe vom Boden aufgenommen, mit einer Förderstufe einer Vorverdichtungstufe, die insbesonders zu einer Einheit zusammengefaßt sind, zugeführt und in dieser zu einem endlosen Strang vorgeformt, über eine Zuführungsstufe einer Verdichtungsstufe übergeben werden, in der das Preßgut durch eine Rotationsbewegung zu einem Preßstrang verdichtet wird, der aus der Verdichtungsstufe als geformter Rundpreßballen an eine Abgabestufe abgegeben und von dieser auf dem Boden oder einem Transportfahrzeug oder auf einer folgenden Nachbearbeitungsstufe abgelegt wird, **dadurch gekennzeichnet, daß** in der Verdichtungsstufe durch die Zufuhr des Preßgutes in Form eines vorgeformten, insbesonders vorverdichteten, Gutstranges zu dem in Drehbewegung versetzten Preßgut ein endloser verdichteter Preßstrang (15) gebildet wird, dessen Verdichtung durch die Menge des zugeführten Preßgutes und durch den Durchtrittswiderstand bei der Bewegung durch die Verdichtungsstufe beeinflußbar ist, wobei der endlose Preßstrang gleichlaufend mit seinem längsaxialen Austritt aus der Verdichtungsstufe und in einer unnmittelbar anschließenden Stützstufe unter Beibehaltung der Rotationsbewegung und der Austrittsbewegung, getragen wird und insbesonders nach Bewickeln mit Garn, Netz oder Folie o. dgl. in einer Bewicklungsstufe, in einer Abtrennstufe abgelängt wird.

2. Verfahren nach dem vorhergehenden Anspruch, dadurch gekennzeichnet, daß zumindest im Endbereich der Verdichtungsstufe, oder an diesen anschließend eine Beeinflussungsstufe, zur Veränderung des Durchtrittwiderstandes für den endlosen Preßstrang (15), einschaltbar ist, mit der die Verdichtung des Preßgutes beeinflußbar ist.

3. Verfahren nach dem einem der vorhergehenden Ansprüche, dadurch gekennzeichnet, daß der vorgeformte Gutstrang in die Verdichtungsstufe, in einer die Zuführung und die Aufnahme durch den endlosen Preßstang (15) begünstigenden Bewegungsrichtung, vorzugsweise durch die Umlenkung des zugeführten Gutstranges in die Drehrichtung des endlosen Preßstranges (15), in einer sich verjüngenden Heilform, zu dem bereits verdichteten endlosen Preßstrang (15) hinzutretend, eingeführt wird.

4. Verfahren nach dem einem der vorhergehenden Ansprüche, dadurch gekennzeichnet, daß die Abtrennstufe mit einer Verschiebestufe an die längsaxiale Bewegung des Preßstranges (15) und/oder des Rundpreßballens (15')anpaßbar ist, wobei der Rundpreßballen (15'), insbesondere angetrieben, um seine Längsachse rotiert.

5. Verfahren nach dem einem der vorhergehenden Ansprüche, dadurch gekennzeichnet, daß der abgetrennte Rundpreßballen (15) von der Abgabestufe, in einer vorwählbaren Ausrichtung seiner Raumlage ablegbar ist.

6. Verdichtungsvorrichtung zur Durchführungs des Verfahrens nach einem der vorhergehenden Verfahrensansprüche, mit einer langsaxial rotierenden, rotationssymmetrischen Preßkammer, an deren einer Stirnseite in einer Öffnung einer den Querschnitt der Preßkammer abschließenden feststehenden Stirnplatte ein Zuführkanal endet, dem eine Aufsammeleinrichtung und eine Förder- und Vorverdichtungseinrichtung unmittelbar vorgeordnet sind und an deren Austrittsseite eine Ablegeeinrichtung angeordnet ist, **dadurch gekennzeichnet, daß**
a) die Austrittsseite (11) der, insbesonder zylindrischen Preßkammer (1) über den Querschnitt im wesentlichen offen ist;
b) von der Austrittsseite (11) her, über den Umfang der Preßkammer (1), insbesondere gleichmäßig verteilt, zumindest über einen kleineren Teil der Länge der Preßkammer (1) reichend, diese im Durchmesser und/oder den Austrittsquerschnitt veränderbar, insbesonders verringerbar, ausgebildet ist;
c) eine Stützvorrichtung (6) die die Drehbewegung des Preßstranges (15) und des abgetrennten Rundpreßballens (15') erlaubt oder unterstützt, an die Austrittsseite (11) anschließend angeordnet ist;
d) eine Bewickelungseinrichtung (20) für ein Folien- oder Netzband (19) oder Bindegarn oder dergleichen an der Austrittsseite (11) der Preßkammer (1), im wesentlichen unmittelbar an diese anschließend oder an deren Mantel selbst angeordnet ist;
e) eine Abtrenneinrichtung (5) an der Austrittsseite (11) der Preßkammer (1) nachgeordnet ist, die auf eine ortsfest angebrachte Verschiebeeinrichtung (22), insbesonders aus Führungen bestehend, aufgesetzt, auf dieser während des Abtrennvorganges zusammen mit der Längsbewegung des Preßstranges (15) bewegbar ist.

7. Verdichtungsvorrichtung nach Anspruch 6, dadurch gekennzeichnet, daß die Preßkammer (1) einen zylindrischen Querschnitt aufweist und insbesonders aus, vorzugsweise überwiegend angetriebenen, parallel zur Längsachse der Preßkammer (1) ausgerichtet gelagerten Walzen gebildet ist.

8. Verdichtungsvorrichtung nach Anspruch 6 oder 7, dadurch gekennzeichnet, daß die Preßkammer (1), von der Austrittsseite (11) her, zumindest über einen Teil ihrer Länge, mit einer Mehrzahl von Mantelelementen (3) versehen ist, die insbesonders quer zur Längsachse der Preßkammer (1) nach innen zu, insbesonders mit einer Verstelleinrichtung, vorzugsweise mit im wesentlichen über die Mantelelemente (3) in Längsrichtung verschiebbaren Stellrollen, verschwenkbar und einstellbar sind.

9. Verdichtungsvorrichtung nach einem der Ansprüche 6 bis 8, dadurch gekennzeichnet, daß die Stirnplatte (2) im wesentlichen aus einer Mehrzahl von frei drehbaren oder angetriebenen, vorzugsweise konischen Walzen gebildet ist oder in diese eingebaut hat, die insbesonders radial ausgerichtet sind.

10. Verdichtungsvorrichtung nach einem der Ansprüche 6 bis 9, dadurch gekennzeichnet, daß die Preßkammer (1) mit mehreren, im wesentlichen gleichmäßig über den Umfang verteilten, Einbauten oder Ausformungen versehen ist.

11. Verdichtungsvorrichtung nach einem der Ansprüche 6 bis 10, dadurch gekennzeichnet, daß die Stützvorrichtung (6) den unteren Teil des Preßstranges (15) und des abgetrennten Rundpreßballens (15') mit, vorzugsweise angetriebenen Walzen unterstützt, die achsparallel zu diesem ausgerichtet gelagert sind.

12. Verdichtungsvorrichtung nach einem der Ansprüche 6 bis 11, dadurch gekennzeichnet, daß die Abtrenneinrichtung (5) im wesentlichen zwei aneinander liegende, gegensinnig angetriebene, vorzugsweise hin- und hergehende, Messer umfaßt, die beim Abtrennvorgang im wesentlichen bis zum Halbmesser, für die vollständige Durchtrennung des Preßstranges (15), einschwenkbar sind.

13. Verdichtungsvorrichtung nach einem der Ansprüche 6 bis 12, dadurch gekennzeichnet, daß die Preßkammer (1) mit einer nach der eingestellten Schichtstärke des Preßstranges (15) variierenden Drehzahl antreibbar ist.

14. Verdichtungsvorrichtung nach einem der Ansprüche 6 bis 13, dadurch gekennzeichnet, daß eine Schiebeeinrichtung (14), vorzugsweise unterhalb des abgetrennten Rundpreßballens (15'), angeordnet ist, die zwischen dem Bereich bei der Abtrenneinrichtung (5) bis in den Bereich der Ablegeeinrichtung (12) hin angetrieben verschiebbar ist und vorzugsweise einen, nach oben schwenkbar in den Rundballen (15') eingreifend stellbaren Schiebekamm oder dergleichen umfaßt.

15. Verdichtungsvorrichtung nach nach Anspruch 6, dadurch gekennzeichnet, daß die Ablegeeinrichtung (12) den abgetrennten Rundpreßballen (15') wenigstens an einer Stirnseite und an einer, vorzugsweise an zwei Mantelbereichen unterstützt und in voreinstellbarer Lage auf dem Boden oder einer nachgeordneten Wickeleinrichtung (13) oder dergleichen ablegt.

16. Verdichtungsvorrichtung nach Anspruch 6, dadurch gekennzeichnet, daß der Förderkanal (10) mit einer Einlaßöffnung in der Stirnplatte (2) endet, die der Länge nach wenigstens über den halben Durchmesser und vorzugweise annähernd über den ganzen Durchmesser der Stirnplatte (2) reicht und vorzugsweise unterhalb des Zentrums der Stirnplatte (2) liegt, wobei Förderkanal (10) und Öffnung in der Stirnplatte (2) den zugeführten Gutstrang in die Drehrichtung des endlosen Preßstranges (15), vorzugsweise mit vor der Stirnplatte (10) angeordneten Umlenkwalzen oder dergleichen, umlenkend, insbesonders richtungsändernd, den zugeführten Gutstrom, in Bewegungsrichtung des endlosen Preßstranges (15), in eine sich verjüngende Keilform überführend geformt, in der Preßkammer (1) enden.

17. Verdichtungsvorrichtung, nach Anspruch 6, dadurch gekennzeichnet, daß die Förder- und Vorverdichtungseinrichtung (8) mit einem ein- oder ausschaltbaren Schneidwerk (9), mehrere Schneidmesser umfassend, versehen ist.

18. Verdichtungsvorrichtung, nach Anspruch 6, dadurch gekennzeichnet, daß die Ablegeeinrichtung (12) zur Längsachse der Preßkammer (1) achsparallel verschiebbar und insbesonders in der von der Preßkammer (1) entfernten Endlage, in Richtung der Ablegestelle, vorzugsweise als Wagen verfahrbar ausgebildet, eingerichtet ist.
